Europäisches Patentamt

**European Patent Office**

**Office européen des brevets**

(19)

(11) Publication number: **0 004 145**
**B1**

(12) **EUROPEAN PATENT SPECIFICATION**

(45) Date of publication of patent specification: **11.07.84**

(51) Int. Cl.³: **B 01 D 45/08, A 47 L 9/10**

(21) Application number: **79300266.8**

(22) Date of filing: **21.02.79**

(54) **Fluid/particle separator unit.**

(30) Priority: **28.02.78 GB 782878**

(43) Date of publication of application:
**19.09.79 Bulletin 79/19**

(45) Publication of the grant of the patent:
**11.07.84 Bulletin 84/28**

(84) Designated Contracting States:
**BE CH DE FR GB IT NL SE**

(56) References cited:
**CH - A - 296 327**
**DE - C - 331 053**
**DE - C - 906 402**
**DE - C - 1 046 948**
**FR - A - 643 441**
**FR - A - 1 053 943**
**FR - A - 1 153 288**
**GB - A - 278 900**
**US - A - 1 360 929**
**US - A - 2 357 734**

**The file contains technical information
submitted after the application was filed and not
included in this specification**

(73) Proprietor: **Mellor, Fred**
**57 Sandringham Road**
**Dalston London E8 2LR (GB)**

(72) Inventor: **Mellor, Fred**
**57 Sandringham Road**
**Dalston London E8 2LR (GB)**

(74) Representative: **Stephens, Michael John**
**M.J. Stephens & Co. 46 Tavistock Place**
**Plymouth PL4 8AX (GB)**

Courier Press, Leamington Spa, England.

## Description

The present invention relates to a fluid/particle separator unit for separating particles from a fluid flow and to a suction cleaner fitted with such a separator unit.

Many types of fluid/particle separators are in use in industry and in domestic apparatus for various purposes, perhaps the simplest being the filter. The common industrial suction cleaner, for example, employs motor-driven impellers to draw air through a hose, the free end of which can be placed on or near a surface to be cleaned, into a container provided with a filter. Sufficient working air flow must be developed by the impellers to draw in dust and grit together with the air, the dust and grit being trapped by the filter and retained in the container, whilst the cleansed air is expelled to the atmosphere.

After some time the container inevitably becomes filled with dirt and this must be emptied out before cleaning is continued. It has been found, however, that the filter can become clogged with dust even before the container is full, so that the working air flow developed by the impeller gradually falls off and the cleaner no longer cleans efficiently. In fact, when used to collect extremely fine dust, such as talc or the dust generated by the masonry cutting tool described in U.K. Patent No. 1105308, the filters of even powerful industrial vacuum cleaners can become clogged after as little as 30 seconds of use.

All types of filters, used in a multiple of other instruments and industrial plants, from air conditioning units to chemical separators, suffer from this same disadvantage of clogging and require cleaning or replacement at regular intervals.

Various attempts have been made to develop alternative separating apparatus with greater or lesser degrees of success. For example, electrostatic precipitators and centrifugal separators can be made which are very efficient at particle separation but tend to be relatively complex and expensive to manufacture and/or to operate. Experiments have therefore been made with simpler forms of rotary separators as shown by U.K. Patent No. 278900 and French Patent No. 643,441 by the same Applicants.

In the above Patents, apparatus is described in which a rotary separator located across an inlet to an air impeller has vanes projecting from that side thereof facing upstream of the air flow for centrifuging entrained particles out of the air flow which passes through apertures in the separator to the impeller.

In the Provisional Specification of the above U.K. Patent one embodiment of the separator comprises two coaxial discs with radially-elongate, staggered apertures, the upstream disc having radially elongate vanes projecting at right angles therefrom intermediate its apertures. It was accepted that not all the particles were centrifuged by the separator vanes, some hitting the disc surface and, needless to say, the apertures and passing through the separator with the air flow.

By the filing date of the U.K. Complete Specification, this embodiment of the apparatus had been modified; the relatively large elongate apertures had been replaced by perforations. This apparatus was still not completely successful, however, since by the filing of the French application (from which the pre-characterising part of claim 1 is known), further modifications had been made; the vanes had been inclined to the disc surface, occluding direct axial passage thereto by the air flow, presumably in an attempt to prevent the particles from reaching the disc apertures.

In concentrating on the arrangement of the apertures and vanes of the separator, the Applicants of the above Patents, however, overlooked one inherent defect of all versions of their apparatus. In each embodiment the rotary separator is surrounded by a cylindrical housing and its periphery is closely spaced from the housing and from an annular flange projecting inwardly from the free edge thereof. The result is that particles centrifuged by the separator are flung against the housing and, despite the provision of a duct for bleeding them away from this region, are inevitably entrained in the air flow through the peripheral clearance between the separator and the housing to the impeller.

A much earlier proposal for a rotary separator is described in U.S.S.N. 1,360,929. In this apparatus a hollow-bladed impeller has, on one side thereof, a plurality of radial slots and associated vanes formed by cutting and pressing the metal so that the vanes project into the impeller blades. The impeller is not only intended to create an air flow, which passes into the blades through the slots and on through a hollow shaft of the impeller, but also to separate particles from the air flow, the particles colliding with the vanes and being rejected. Unfortunately, the attempt to combine the impelling and separating functions in this one device means that neither is effected very efficiently, particularly if the air flow path through the rotor is considered.

An object of the present invention is to provide an improved rotary separator unit for use in many of the fields of fluid/particle separation in which filters and other apparatus are currently employed, which is relatively inexpensive to produce and which can achieve efficient, continuous separation of fine particles from a fluid even after prolonged periods of use.

According to one aspect of the invention there is provided a fluid/particle separator unit for mounting in a flow of particle-containing fluid, comprising:

(i) a static chamber having a circular fluid inlet and fluid outlet,

(ii) an apertured rotor disc cooperating with the inlet,

(iii) a drive for rotating the rotor disc in use,

(iv) vanes projecting from one side of the rotor disc at an acute angle to the plane thereof, each vane having a surface facing both in the circumferential direction of rotation of the disc and upstream of the fluid flow in use, and

(v) an annular flange which is coaxial with the rotor disc and which bounds the inlet; the periphery of the rotor disc being closely spaced in a direction parallel to the rotational axis of the rotor disc from the annular flange; characterised by:

(vi) a circular skirt coaxial with the rotational axis of the rotor disc,

(vii) rotor disc being of larger diameter than the circular fluid inlet and smaller diameter than the circular skirt,

(viii) the periphery of the rotor disc being closely spaced in radial direction from the circular skirt,

(ix) the rotor apertures and vanes being provided respectively in and on the same disc,

(x) each rotor aperture having a respective one of said vanes extending along or adjacent the trailing edge thereof with respect to the circumferential direction of motion of the rotor when rotated by the drive, and

(xi) each vane being located on the side of the rotor disc facing the circular fluid inlet.

The apparatus of the present invention thus differs from that described in GB—A—278,900 and FR—A—643,441 in that the rotary separator disc is located on the opposite side of the flange defining the inlet, with the vanes projecting in the opposite direction. The vanes in the present apparatus do not, therefore, occlude the direct axial flow of fluid to the disc apertures but it is found that efficient separation of particles from a fluid flow can be achieved with the unit described above by suitable choice of the rotor and rotational speed for a particular rate of the fluid flow.

In preferred embodiments of the invention, peripheral bleed means are provided for bleeding fluid out from or into the chamber to allow automatic regulation of the separator action to achieve efficient separation for a range of rotors and flow rates. Depending on the operating pressure in the separator unit, the bleed means allow fluid to bleed into or out from the chamber to optimise the separation. The bleed means may comprise the clearance between the rotor and the flange defining the inlet or may include or comprise at least one fluid bleed vent located in a peripheral wall of the chamber.

Separation can be further improved by arranging each bleed vent to direct fluid peripherally into the chamber in counterflow to the peripheral direction of rotation of the rotor, such vents also receiving fluid directed peripherally of the chamber by the rotor to allow it to bleed from the chamber.

The particle-containing fluid flow may be fed to the inlet to the chamber by any suitable means; for example, it may be pumped to the inlet by means of a pump or impeller located on the inlet side of the chamber, in use, or it may be drawn through the chamber by a vacuum pump or impeller located on the outlet side of the chamber.

The chamber of the separator unit of the present invention preferably has a circular cross section, the inlet comprising substantially the whole of a circular end of the chamber opposite a wall containing the outlet: the chamber is preferably cylindrical but may be frustoconical, the inlet occupying the larger end of the chamber.

The chamber may be adapted to form part of a duct for the fluid flow, in which case a passage may be provided externally of the chamber to allow communication between each bleed vent and the interior of the duct on the downstream side of the rotor. In preferred embodiments of the invention, however, the chamber is adapted to be fitted in a duct or container through which the fluid flows, in use, the outlet from the chamber communicating with an outlet opening of the duct or container and each bleed vent comprising an opening in the chamber wall which communicates directly with the duct or container outside the chamber.

Each bleed vent may be a small aperture in the chamber wall but is preferably a slot which is elongate in a direction parallel to the axis of the chamber, but need not be rectilinear, and the width of which extends substantially radially of the chamber. This may be achieved, for example, in a chamber having a thick outer wall by forming a channel within the wall extending nearly circumferentially from the outer to the inner surface. In a preferred embodiment of the invention, however, the slot is formed between the edges of two wall portions of the chamber, which are radially separated, either by slight deformation of at least one of the wall portions or, in a chamber having two or more bleed slots, by slight offsetting of the axis of the wall portions with respect to each other.

It is found that, for a given rotor speed, variation of the total area of the bleed vents affects the degree of separation achieved by a separator unit according to the invention, within limits; the finer the particles it is desired to separate from a fluid the greater the area of bleed vents required.

A separator unit according to the invention may be provided with means, such as a manually-operable shutter, for varying the total area of the bleed vents for use of the unit with particles of different sizes.

In order to prevent large particles from reaching the bleed vents in use, and possibly blocking them, a mesh of smaller mesh size than a respective bleed vent may be placed in the path of the fluid flow to each said vent.

A separator unit according to the invention preferably includes a baffle wall sealed to the periphery of the outlet so as completely to surround the outlet and extending axially within the chamber, a free edge of the wall being spaced from the rotor, preferably by a gap which has substantially the same total area as the cross-sectional area enclosed by the baffle wall. Baffle walls which do not completely enclose the outlet but are located in the path of a direct flow between the outlet and each bleed vent may alternatively be provided.

The chamber of a separator unit according to the present invention may be made from any suitable material, such as metal or plastics material and, in the latter case, would preferably be moulded substantially in one piece.

The rotor of the separator unit of the present invention is preferably made of a durable material, such as aluminium or steel since it is subject to considerable stress, in use, but may be made of a suitable plastics or other material. The rotor is conveniently formed with elongate apertures and an elongate vane extending along or adjacent the trailing edge of each aperture with respect to the circumferential direction of motion of the rotor in use. Such a rotor is arranged with the vanes projecting into the chamber at an acute angle to the said direction of motion.

In the case of a metal rotor, the vanes and apertures may conveniently be formed in one operation by punching from a metal disc. The apertures and vanes may have straight edges, for example, being generally triangular or rectangular in form, the vanes being substantially planar, or the edges may be curved, satisfactory particle separation having been achieved with vanes and apertures of various shapes and sizes. For reasons of strength, the apertures preferably do not extend to the outer edge of the disc unless a cylindrical, strengthening skirt is provided. In practice, a peripheral portion of the disc is planar and closely spaced, in an axial direction, from the flange defining the inlet to limit any fluid flow between the edge of the rotor and the chamber wall.

For rotors in which the vanes are planar, it is found that each vane may conveniently be inclined at an angle of from 10° to 75°, preferably from 25° to 60° to the plane of the disc. Also, the trailing edge of the aperture may be inclined to the radius through its end closer to the disc centre by an angle of from 0° to 75° inclusive, preferably from 0° to 45°, on either side of the radius.

The actual angles chosen for a particular rotor and also the number, shape and size of the vanes and apertures depend on the intended use of the rotor since different configurations provide better separation for different sized particles. In general, it is found that the degree of separation achieved by a unit according to the invention is affected by changes in the inclination of the vanes to the rotor disc, while the volume of fluid flow through the apparatus is affected by the angle of the aperture to the radius.

The separator unit of the present invention may usefully be adapted for incorporation in a suction cleaner to replace the usual filter unit and according to a further aspect of the invention there is provided a suction cleaner comprising a container having an inlet opening, an outlet opening, an impeller/motor assembly arranged to withdraw air from the container through the outlet opening and a separator unit as described above mounted in the container, such that the outlet from the chamber of the separator unit communicates with the outlet opening of the container.

In use of a suction cleaner according to the invention, the dust particles in air drawn into the container are separated from the air flow by the separator unit and settle in the container under gravity. When the container is full, the cleaner must be stopped while it is emptied but otherwise the working air flow remains substantially constant since, unlike a filter, the separator unit does not become clogged.

In a suction cleaner having an air-impeller mounted adjacent the outlet for drawing air through the container, the rotor may be mounted on an extension drive shaft adapted to be fixed to the drive shaft of the impeller/motor assembly to be driven thereby. Alternatively, the rotor of the separator, unit may be driven by any suitably means; for example, it may be mounted on a drive shaft arranged to be driven by an auxiliary motor or it may be driven by an impeller located in the fluid flow.

Clearly, a separator unit according to the invention may be provided at the inlet to any motor/impeller assembly normally provided with a filter, such as the impeller of an air-conditioning unit, to ensure that particles are not sucked into the assembly to cause damage. The unit may also, for example, be used in transfer ducts for finely divided materials such as flour or possibly to coalesce mists of liquid droplets rather than solid particles.

A particular use of the separator unit might be in place of the air filter usually used across the air intake of an internal combustion engine, whether used in a motor vehicle or elsewhere, and especially in industries, such as mining and cement manufacturing, in which a great deal of fine dust is generated and filters must be replaced very frequently.

A further use might be in medical laboratories which have very stringent air filtering regulations because of the health hazards involved in the release of bacteria to the atmosphere.

One embodiment of the invention will now be more particularly described, by way of example, with reference to the accompanying, purely diagrammatic drawings, in which:

Figure 1 is a part-sectional view of an industrial vacuum cleaner fitted with a fluid/particle separator unit according to the invention;

Figure 2 is a sectional view of the separator unit of Figure 1 taken on line II—II of Figure 3;

Figure 3 is a sectional view taken on line III—III of Figure 2, and

Figure 4 is a graphical representation of the percentage separation of particles of different sizes from a gas flow achieved by the apparatus of Figures 1 to 3 with impeller separator rotors of different designs, and other apparatus.

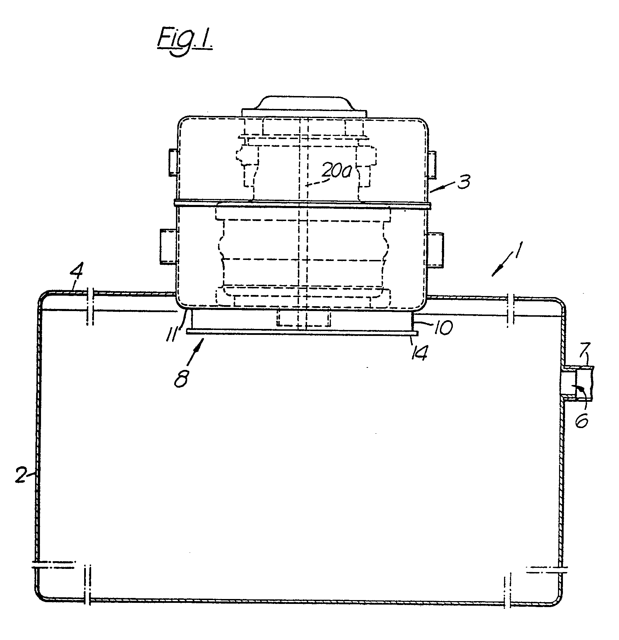

Referring to Figure 1 of the drawings, an industrial vacuum cleaner is shown generally indicated 1, comprising a cylindrical container 2, which is shown in its normal orientation in use, resting on a circular base wall, and an electric motor and impeller assembly 3 mounted on a removable lid 4 of the container. The motor/impeller assembly 3 comprises a 700 watt motor and a two-stage exhaust turbine which can rotate at speeds of the order of 20,000 r.p.m. to exhaust air at a rate of the order of 2m³/min from the container 2 through an outlet 5, approximately 3.8 cm in diameter. A cylindrical wall 12 approximately 1.4 cm in depth is sealed to the periphery of the outlet 5 and projects downwardly into the container 2.

The container 2 has an air inlet opening 6 in the upper part of its outer cylindrical wall to which a hose 7 is connected. The free end (not shown) of the hose 7 may be provided with any suitable cleaning attachment commonly used with such industrial vacuum cleaners, through which dust-laden air can be drawn into the container 2.

Immediately beneath the motor/impeller assembly 3, within the container 2, is mounted a separator unit according to the invention, generally indicated 8.

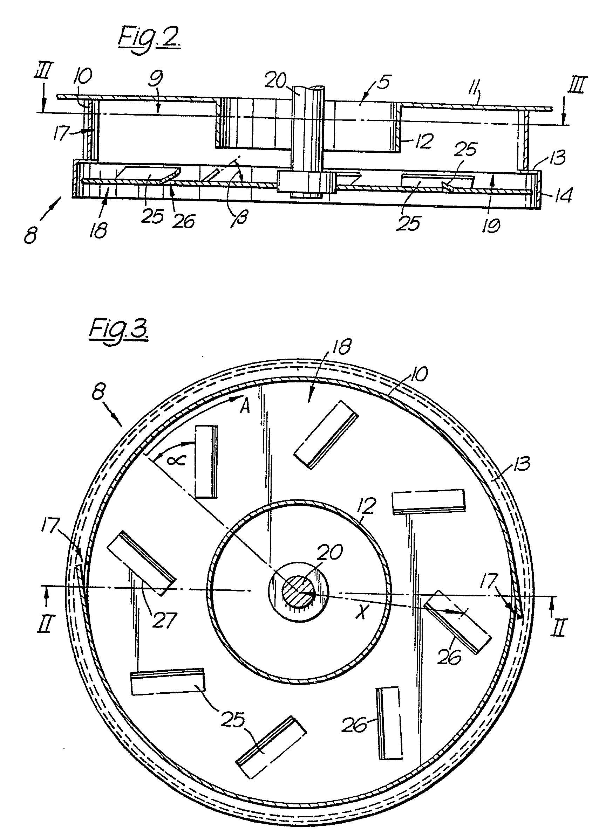

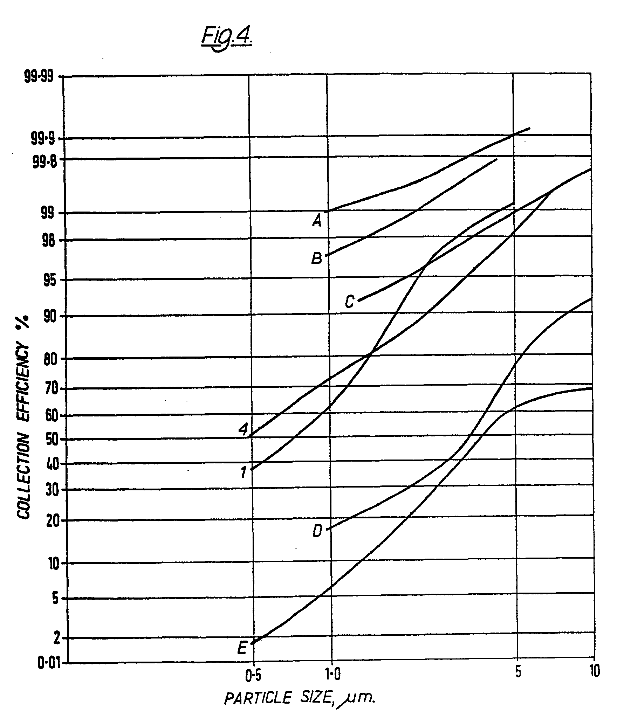

The separator unit 8 is best shown in Figures 2 and 3 and includes a chamber 9 bounded by the substantially cylindrical wall 10, 12 cm in diameter by 1.8 cm in depth, attached around its upper periphery to a lower wall 11 of the housing of the motor/impeller assembly 3, coaxial with the outlet 5 and wall 12. The wall 10 may be formed integrally with the housing or alternatively the separator unit may be formed as a separate item for fitting to a suction cleaner or other apparatus and may incorporate an upper, annular wall with an outlet from the chamber, and an inner cylindrical wall, corresponding to the wall 12, which constitutes a baffle wall of the unit.

The wall 10 is formed with two diametrically opposed slits 17 which extend parallel to the axis of the chamber 9, their edges being spaced apart radially by 0.2 cm. The upper ends of the slits are closed by the wall 11 while the lower ends are closed by an annular flange 13, attached to the lower edge of the wall 10 and extending radially-outwardly, parallel to the wall 11. The slits 17 comprise bleed vents, arranged to direct air generally circumferentially into the chamber 9 or to allow air to bleed out from the chamber. The slits may conveniently be between 0.1 and 0.3 cm wide.

The lower end of the chamber 9 is open but an impeller rotor 18 comprising an apertured disc, 12.5 cm in diameter extends across it substantially to close the opening 19. The rotor 18 is mounted, in a known manner, for rotation with an extension drive shaft 20 which extends axially through the chamber 9 and is attached at its upper end to, or is integral with, a drive shaft 20a of the impeller/motor assembly 3 to be driven thereby. The rotor impeller is made from aluminium but may alternatively be made from some other durable material, such as stainless steel or plastics.

A peripheral portion of the rotor 18 extends outwardly of the chamber 9 and is spaced, in an axial direction, from the flange 13, attached to the lower edge of the wall 10, the peripheral edge of the rotor being closely surrounded by a skirt 14 dependent from the flange 13. The rotor disc is separated from the lower edge of the baffle wall 12 by a cylindrical gap, approximately 8 mm in depth, the total area of the gap being substantially equal to the total cross-sectional area of the outlet 5.

The impeller rotor 18 is formed with a plurality of similar, rectangular vanes 25 and apertures 26 made simultaneously by punching the vanes from the disc. The rotor 18 is mounted such that the vanes 25 project towards the interior of the chamber 9 but not as far as the slits 17; the rotor is driven by the impeller motor, in use, to rotate in the direction of arrow A in Figure 3, the vanes extending along the trailing edges of the apertures with respect to the direction of motion A. The number and positioning of the vanes and apertures may be varied to give differing separation results as will be described in further detail below.

In use of the suction cleaner of Figure 1, the motor/impeller unit 3 exhausts air from the container 2 through the outlet opening 5 causing dust-laden air to be drawn into the container through the hose 7 and inlet opening 6. In flowing to the outlet opening 5, the air must pass through the apertures 26 in the impeller rotor 18 and into the chamber 9. It is found that separation of the particles from the air occurs, the particles settling in the container 2 under gravity while substantially particle-free air passes through the chamber 9 and is exhausted through the outlet opening 5 by the air impeller of the assembly 3.

The degree of separation achieved by a rotor 18 depends on the number, shape, size and arrangement of the vanes 25 and apertures 26, it being possible to achieve satisfactory particle separation by careful choice of the dimensions of these factors without the provision of the slits 17 in the chamber wall 10 which allow air to bleed out from or into the chamber 9 some air bleeding may, in this case, occur through the peripheral clearance between the rotor and the skirt 14 and flange 13. The slits, however, allow more satisfactory separation to be achieved with different rotors and varying working-airflow rates.

Comparative tests have been carried out using the suction cleaner described above with different rotor impellers 18. The rotors had the same basic structure as that shown in Figures 2 and 3, the following dimensions being identical:

| | |
|---|---|
| Diameter of rotor | 12.5 cm |
| Length of aperture 26 | 2.0 cm |
| Width of aperture 26 | 0.6 cm |
| Distance x from disc centre to midpoint of trailing edge of aperture | 4.6 cm |

The distance x was the same for all the discs to ensure that the average circumferential velocity of the apertures was constant throughout the tests.

The following factors were varied:
The number of apertures (N);
The angle $\alpha$ (see Figure 3) between the trailing edge 27 of each aperture 26 and the radius through its end closest to the centre, the value of $\alpha$ being given as positive or negative respectively according to whether the trailing edge is inclined forwardly (as shown) or rearwardly of the radius in the direction of circumferential motion of the disc;

The angle $\beta$ between each vane 25 and the plane of the disc.

The volume (V) of air flowing through the suction cleaner per minute was measured for each rotor. Details of the rotors tested are given in the following table:

| Rotor | N | $\alpha$ | $\beta$ | V m³/min |
|---|---|---|---|---|
| 1 | 7 | −25° | 25° | 0.011 |
| 2 | 7 | 0° | 25° | 0.013 |
| 3 | 7 | +25° | 25° | 0.017 |
| 4 | 8 | +45° | 25° | 0.018 |
| 5 | 8 | +45° | 45° | 0.020 |
| 6 | 7 | +45° | 40° | 0.019 |
| No rotor | — | — | — | 0.048 (approx.) |
| textile filter | — | — | — | 0.036 |

From the above table, it is clear that the impeller rotors 18 reduce the through-flow of air through the suction cleaner compared with that obtainable without the rotor, and also compared with that obtainable initially with a filter. The flow obtained with the rotor is, however, substantially constant until the container 2 is almost full, whereas that obtained with the filter falls very quickly to a value which is insufficient for effective use of the cleaner.

Good separation of particles down to a size of about 10 micron diameter was achieved with all the above rotors; the efficiency of the separation achieved by the rotors 1 and 4 is shown graphically by the curves labelled 1 and 4 in Figure 4, the efficiency being measured as follows:

Air containing an aerosol dispersion of fly ash, having a total mass concentration of particles of diameter less than 11 micron of 0.6635 g/m³, was drawn through the suction cleaner 1 and the concentration and particle size distributions in the air entering and leaving the cleaner were determined with the aid of an 'Anderson' sampler and isokinetic probe. Cumulative undersize mass concentration curves for the aerosol entering and leaving the cleaner were drawn from this data and the slopes of the curves were measured at points corresponding to chosen particle sizes to obtain values of the frequency distribution of these sizes. The efficiency of separation for the chosen sizes was then calculated from the slopes at the corresponding points on the two curves by the formula:

$$\eta x = 1 - \frac{(f_2)x}{(f_1)x},$$

where
$\eta x$ is the efficiency at separation at particle size x,
$f_2$ is the frequency of particle size x after the separator unit, and
$f_1$ is the frequency of particle size x before the separator unit.

In Figure 4, the collection efficiency is plotted on a logarithmic scale on the ordinate against the particle size x in microns on the abscissa. For comparison, Figure 4 also shows efficiency curves obtained from similar tests carried out on the separating apparatus given below:

Efficiency curves shown in Figure 4

| Curve | Apparatus |
|---|---|
| A | Fabric filter |
| B | Venturi scrubber |
| C | Electrostatic precipitator |
| D | Cyclone separator |
| E | Apparatus of Figures 1 to 3 without the rotor 18, but with V restricted to that with rotor No. 4 |
| 1 | Apparatus of Figures 1 to 3 with rotor No. 1 |
| 4 | Apparatus of Figures 1 to 3 with rotor No. 4. |

It will be seen from curves 1 and 4 of Figure 4 that the apparatus of the present invention can achieve a degree of separation of fine particles from an air flow which is considerably better than that achieved by a cyclone and which approaches, and can exceed, that achieved by an electrostatic precipitator.

The present apparatus is more comparable to a filter than to a venturi scrubber, which requires moisture, and although not initially as efficient as the filter, has the advantage of being capable of continuous operation since it does not become clogged.

From a comparison of curves 1 and 4, it is seen that the rotor No. 4 is more efficient than the rotor No. 1 for very fine particles of the size, for example, of talc, whereas the rotor No. 1 is more efficient for less fine particles of a size, for example, of fine flour. Other tests have shown that slight variations in the number and size of the apertures 26 do not affect the separation substantially; the differences shown in the curves 1 and 4 are thus largely due to the variation of the angle $\alpha$, the apertures of the rotor No. 1 being inclined rearwardly with respect to the direction of motion and causing a reduction in the volume flow compared with that through the rotor No. 4 in which the apertures are inclined forwardly.

Tests on rotors having vanes at different angles to the plane of the disc have shown that better separation of larger particles is achieved at angles of $\beta$ of substantially 45° and of smaller particles at angles of substantially 25°. Tests on varying the depth of the baffle wall 12 have shown that when the distance between the edge of the wall and the rotor is increased, the volume flow through the apparatus increases and the degree of separation decreases.

It should be noted that the power consumption of the impeller/motor assembly 3 with the rotor No. 4 fitted was 805.8 ampere-volts, compared with 900.6 ampere-volts for the run without the impeller rotor 18, the through-flow of air being much greater, of course, in the latter case. The rotational speed of the assembly 3 was 21,800 r.p.m. with the rotor No. 4 fitted and 21,000 r.p.m. without the rotor.

## Claims

1. A fluid/particle separator unit (8) for mounting in a flow of particle-containing fluid, comprising:

(i) a static chamber (9) having a circular fluid inlet (19) and fluid outlet (5),

(ii) an apertured rotor disc (18) cooperating with the inlet,

(iii) a drive (20) for rotating the rotor disc (18) in use,

(iv) vanes (25) projecting from one side of the rotor disc at an acute angle to the plane thereof, each vane having a surface facing both in the circumferential direction of rotation of the disc and upstream of the fluid flow in use, and

(v) an annular flange (13) which is coaxial with the rotor disc and which bounds the inlet; the periphery of the rotor disc being closely spaced in a direction parallel to the rotational axis of the rotor disc from the annular flange, characterised by:

(vi) a circular skirt (14) coaxial with the rotational axis of the rotor disc (18),

(vii) the rotor disc being of larger diameter than the circular fluid inlet (19) and smaller diameter than the circular skirt,

(viii) the periphery of the rotor disc being closely spaced in radial direction from the circular skirt,

(ix) the rotor apertures (26) and vanes (25) being provided respectively in and on the same disc,

(x) each rotor aperture having a respective one of said vanes extending along or adjacent the trailing edge (27) thereof with respect to the circumferential direction of motion (A) of the rotor when rotated by the drive, and

(xi) each vane being located on the side of the rotor disc facing the circular fluid inlet.

2. A fluid/particle separator unit according to Claim 1, characterised in that each aperture (26) and associated vane (25) is elongate parallel to said trailing edge.

3. A fluid/particle separator unit according to Claim 2, characterised in that each vane (25) is substantially planar and inclined at an angle ($\beta$) of from 10° to 75° inclusive to the plane of the disc.

4. A fluid/particle separator unit according to Claim 3, characterised in that each aperture (26) is substantially rectangular and the said trailing edge (27) thereof is inclined to the radius through its end closer to the disc centre at an angle ($\alpha$) of from 0° to 75° inclusive on either side of the radius.

5. A fluid/particle separator unit according to any one of Claims 1 to 4, characterised in that the inlet (19) comprises substantially the whole of a circular end of the chamber opposite a wall (11) containing the outlet (5).

6. A fluid/particle separator unit according to any preceding claim, characterised in that the peripheral bleed means (17) are provided for bleeding fluid out from or into the chamber (9).

7. A fluid/particle separator unit according to Claim 6, characterised in that the peripheral bleed means include or comprise at least one bleed vent (17) in a wall (10) of the chamber (9) intermediate the rotor (18) and the outlet (5).

8. -A fluid/particle separator unit according to Claim 7, characterised in that each bleed vent (17) is arranged to direct fluid peripherally into the chamber (9) in counterflow to the peripheral velocity of the rotor (18), in use.

9. A fluid/particle separator unit according to any one of Claims 6 to 8, characterised in that the chamber (9) is substantially cylindrical, the inlet (19) and the outlet (5) being located at opposite ends thereof, and the or each bleed vent comprises a slot (17) which is elongate in a direction parallel to the axis of the chamber and has a width which extends radially of the chamber.

10. A fluid/particle separator unit according to Claim 9, characterised in that a cylindrical baffle wall (12) is sealed to the edge of the outlet (5) and extends coaxially within the chamber (9).

11. A fluid/particle separator unit according to Claim 10, characterised in that a cylindrical gap is defined between a free edge of the baffle wall (12) and the rotor, the gap being of substantially the same total area as the cross-sectional area enclosed by the baffle wall.

12. A fluid/particle separator unit according to any preceding claim, characterised in that the unit (8) is adapted to be mounted in a container (2) having an inlet opening (6) for a fluid to be cleansed of particles, such that the outlet (5) of the chamber (9) communicates with an outlet opening from the container, particles being trapped in the container in use of the unit and cleansed fluid passing through the outlet opening.

13. A fluid/particle separator unit according to Claim 12, characterised in that it is adapted for mounting in the container (2) of a suction cleaner (1) and the drive for the rotor (18) comprises an extension drive shaft (20) adapted to be coupled to a drive shaft (20a) of a motor/impeller assembly (3) of the suction cleaner to be driven thereby, the motor/impeller assembly cooperating with the outlet opening of the container (2) to withdraw air from the container through the separator unit (8).

14. A suction cleaner comprising a container having an inlet opening, an outlet opening, and a motor/impeller assembly arranged to withdraw air from the container through the outlet opening, characterised in that it includes a fluid/particle separator unit (8) according to Claim 12 or Claim 13, mounted within the container (2) such that the outlet (5) of the chamber (9) of the separator unit communicates with the outlet opening of the container.

15. A fluid/particle separator unit as claimed in any of Claims 1 to 12, further including a motor/impeller assembly (3) connected to the outlet (5) and arranged to exhaust fluid from the chamber (9) therethrough to create said fluid flow into the chamber through the inlet (19) in use.

**Patentansprüche**

1. Fluid/Teilchentrennanlage (8) zur Anbringung in der Strömung eines teilchenhaltigen Fluids, bestehend aus:

(i) einer statischen Kammer (9) kreisförmigem Fluideinlass (19) und -auslass (5),

(ii) einer mit dem Einlass zusammenarbeitenden Rotorscheibe (18) mit Oeffnungen,

(iii) einem Antrieb (20) zum Drehen der Rotorscheibe (18) im Gebrauch,

(iv) von einer Seite der Rotorscheibe unter einem spitzen Winkel zu deren Ebene vorstehenden Flügeln (25) mit jeweils einer Fläche, die im Gebrauch sowohl in die Umfangsdrehrichtung der Scheibe als auch entgegen der Fluidströmung weist, und

(v) einem mit der Rotorscheibe koaxialen und den Einlass begrenzenden Ringflansch (13), wobei sich der Umfang der Rotorscheibe in der Richtung parallel zur Drehachse der Rotorscheibe in geringem Abstand von dem Ringflansch befindet, gekennzeichnet durch:

(vi) ein kreisförmige, mit der Drehachse der Rotorscheibe (18) koaxiale Randleiste (14), wobei

(vii) die Rotorscheibe eine grösseren Durchmesser als der kreisförmige Fluideinlass (19) und einen kleineren Durchmesser als die kreisförmige Randleiste aufweist,

(viii) der Umfang der Rotorscheibe sich in radialer Richtung in geringem Abstand von der kreisförmigen Randleiste befindet,

(ix) die Rotoröffnungen (26) bzw. Flügel (25) in bzw. auf ein und derselben Scheibevorgesehen sind,

(x) jede Rotoröffnung einen solchen Flügel aufweist, der sich entlang oder neben deren Hinterkante (27) bezüglich der Umfangsrichtung der Bewegung (A) der Rotors bei Drehung durch den Antrieb erstreckt, und

(xi) die Flügel jeweils auf der dem kreisförmigen FLuideinlass zugewandten Seite der Rotorscheibe angeordnet sind.

2. Fluid/Teilchentrennanlage nach Anspruch 1, dadurch gekennzeichnet, dass jede Oeffnung (26) und jeder zugehörige Flügel (25) parallel zu jener Hinterkante länglich sind.

3. Fluid/Teilchentrennanlage nach Anspruch 2, dadurch gekennzeichnet, dass jeder Flügel (25) im wesentlichen Planar und unter einem Winkel ($\beta$) von 10° bis und mit 75° zur Ebene der Scheibe geneigt ist.

4. Fluid/Teilchentrennanlage nach Anspruch 3, dadurch gekennzeichnet, dass jede Oeffnung (26) im wesentlichen rechtwinklig ist und deren besagte Hinterkante (27) gegen den Radius durch ihr dem Scheibenmittelpunkt näher liegendes Ende unter einem Winkel ($\alpha$) von 0° bis und mit 75° beidseitig des Radius geneigt ist.

5. Fluid/Teilchentrennanlage nach einem der Ansprüche 1 bis 4, dadurch gekennzeichnet, dass der Einlass (19) ein kreisförmiges, einer den Auslass (5) enthaltenden Wand (11) entgegengesetztes Ende der Kammer im wesentlichen ganz umfasst.

6. Fluid/Teilchentrennanlage nach einem der vorhergehenden Ansprüche, dadurch gekennzeichnet, dass am Umfang Zapfmittel (17) vorgesehen sind, um Fluid aus der oder in die Kammer (9) strömen zu lassen.

7. Fluid/Teilchentrennanlage nach Anspruch 6, dadurch gekennzeichnet, dass die Zapfmittel am Umfang mindestens eine Zapfentlüftung (17) in einer Wand (10) der Kammer (9) zwischen dem Rotor (18) und dem Auslass (5) einschliessen bzw. umfassen.

8. Fluid/Teilchentrennanlage nach Anspruch 7, dadurch gekennzeichnet, dass jede Zapfentlüftung (17) so angeordnet ist, dass sie im Gebrauch Fluid dem Umfang entlang in die Kammer (9) im Gegenstrom zur Umfangsgeschwindigkeit des Rotors (18) leitet.

9. Fluid/Teilchentrennanlage nach einem der Ansprüche 6 bis 8, dadurch gekennzeichnet, dass die Kammer (9) im wesentlichen zylindrisch ausgebildet ist, wobei der Einlass (19) und der Auslass (5) an deren gegenüberliegenden Enden angeordnet sind, und die bzw. jede Zapfentlüftung einen Schlitz (17) enthält, der in Richtung parallel zur Kammerachse länglich ist und eine sich radial zur Kammer erstreckende Breite aufweist.

10. Fluid/Teilchentrennanlage nach Anspruch 9, dadurch gekennzeichnet, dass eine zylindrische Leitwand (12) an der Kante des Auslasses (5) dicht angebracht ist und sich innerhalb der Kammer (9) koaxial erstreckt.

11. Fluid/Teilchentrennanlage nach Anspruch 10, dadurch gekennzeichnet, dass eine freie Kante der Leitwand (12) und der Rotor zwischen sich einen zylindrischen Spalt begrenzen, der im wesentlichen dieselbe Gesamtfläche wie die von der Leitwand umschlossene Querschnittsfläche aufweist.

12. Fluid/Teilchentrennanlage nach einem der vorhergehenden Ansprüche, dadurch gekennzeichnet, dass die Anlage (8) zur Anbringung in einem Behälter (2) mit einer Einlassöffnung (6) für ein von Teilchen zu reinigendes Fluid ausgebildet ist, derart, dass de Auslass (5) der Kammer (9) mit einer Auslassöffnung aus dem Behälter in Verbindung steht, wobei im Gebrauch der Anlage Teilchen in dem Behälter aufgefangen werden und gereinigtes Fluid die Auslassöffnung durchströmt.

13. Fluid/Teilchentrennanlage nach Anspruch 12, dadurch gekennzeichnet, dass sie zur Anbringung im Behälter (2) eines Staubsaugers (1) ausgebildet ist und der Antrieb für den Rotor (18) eine Antriebswellenverlängerung (20) umfasst, die mit der Antriebswelle (20a) einer Motor/Laufradbaugruppe (3) des dadurch anzutreibenden Staubsaugers gekuppelt werden kann, wobei die Motor/Laufradbaugruppe mit der Auslassöffnung des Behälters (2) zum Abziehen von Luft aus dem Behälter durch die Trennanlage (8) zusammenarbeitet.

14. Staubsauger, bestehend aus einem Behälter mit einer Einlassöffnung, einer Auslassöffnung und einer Motor/Laufradbaugruppe, die zum Abziehen von Luft aus dem Behälter durch die Auslassöffnung angeordnet ist, dadurch gekennzeichnet, dass er eine Fluid/Teilchentrennanlage (8) nach Anspruch 12 oder 13 einschliesst, die innerhalb des Behälters (2) so angebracht ist, dass der Auslass (5) der Kammer (9) der Trennanlage mit der Auslassöffnung des Behälters in Verbindung steht.

15. Fluid/Teilchentrennanlage nach einem der Ansprüche 1 bis 12, welche ferner eine Motor/Laufradbaugruppe (3) einschliesst, die mit dem Auslass (5) verbunden und zur Extraktion von Fluid aus der Kammer (9) durch diesen angeordnet ist, um im Gebrauch jene Fluidströmung in die Kammer durch den Einlass (19) zu erzeugen.

**Revendications**

1. Dispositif séparateur de fluide/particules (8) destiné à être monté dans un flux de fluide contenant des particules, comprenant:

(i) une chambre statique (9) comportant une entrée de fluide circulaire (19) et une sortie de fluide (5),
(ii) un rotor en forme de disque à ouvertures (18) coopérant avec l'entrée,
(iii) un élément d'entraînement (20) pour faire tourner le rotor en forme de disque (18) en service,
(iv) des aubes (25) qui font saillie d'un côté du rotor en forme de disque et forment un angle aigu avec le plan de celui-ci, chaque aube ayant une surface orientée à la fois vers le sens circonférentiel de la rotation du rotor et vers l'amont du flux de fluide en service, et
(v) une bride annulaire (13) qui est coaxiale au rotor en forme de disque et qui borne l'entrée;

la périphérie du rotor en forme de disque étant espacée d'une courte distance de la bride annulaire dans un sens parallèle à l'axe de rotation du rotor en forme de disque, caractérisé par:

(vi) une jupe circulaire (14) coaxiale à l'axe de rotation du rotor en forme de disque (18),
(vii) le fait que le rotor en forme de disque a un diamètre supérieur à celui de l'entrée de fluide circulaire (19) et inférieur à celui de la jupe circulaire,
(viii) le fait que la périphérie du rotor en forme de disque est espacée d'une courte distance dans le sens radial de la jupe circulaire,
(ix) le fait que les ouvertures (26) du rotor et les aubes (25) sont prévues respectivement dans et sur le même disque,
(x) le fait que pour chaque ouverture du rotor, une aube correspondante s'étend le long ou près de son bord de fuite (27) dans le sens circonférentiel de mouvement (A) du rotor lorsqu'il est entraîné en rotation par l'élément d'entraînement, et
(xi) le fait que chaque aube est placée du côté du rotor en forme de disque tourné vers l'entrée de fluide circulaire.

2. Dispositif séparateur de fluide/particules suivant la revendication 1, caractérisé en ce que chaque ouverture (26) et son aube associée (25) sont allongées parallèlement au di bord de fuite.

3. Dispositif séparateur de fluide/particules suivant la revendication 2, caractérisé en ce que chaque aube (25) est en substance plane et est inclinée sous un angle ($\beta$) de 10 à 75° inclus par rapport au plan du disque.

4. Dispositif séparateur de fluide/particules suivant la revendication 3, caractérisé en ce que chaque ouverture (26) est en substance rectangulaire et son bord de fuite (27) est incliné par rapport au rayon passant par son extrémité plus proche du centre du disque sous un angle ($\alpha$) de 0 à 75° inclus de part et d'autre du rayon.

5. Dispositif séparateur de fluide/particules suivant l'une quelconque des revendications 1 à 4, caractérisé en ce que l'entrée (19) comprend en substance la totalité d'une extrémité circulaire de la chambre opposée à une paroi (11) contenant la sortie (5).

6. Dispositif séparateur de fluide/particules suivant l'une quelconque des revendications précédentes, caractérisé en ce que des moyens de fuite périphériques (17) sont prévus pour évacuer du fluide de la chambre (9) ou en introduire dans celle-ci.

7. Dispositif séparateur de fluide/particules suivant la revendication 6, caractérisé en ce que les moyens de fuite périphériques comprennent ou présentent au moins un évent de fuite (17) dans une paroi (10) de la chambre (9) entre le rotor (18) et la sortie (5).

8. Dispositif séparateur de fluide/particules suivant la revendication 7, caractérisé en ce que chaque évent de fuite (17) dirige du fluide périphériquement dans la chambre (9) à contre-courant de la vitesse périphérique du rotor (18), en service.

9. Dispositif séparateur de fluide/particules suivant l'une quelconque des revendications 6 à 8, caractérisé en ce que la chambre (9) est en substance cylindrique, l'entrée (19) et la sortie (5) étant placées à ses extrémités opposées, et l'évent de fuite ou chacun d'eux comprend une fente (17) qui est allongée dans un sens parallèle à l'axe de la chambre et présente une largeur s'étendant radialement par rapport à la chambre.

10. Dispositif séparateur de fluide/particules suivant la revendication 9, caractérisé en ce qu'une paroi cylindrique formant chicane (12) est scellée au bord de la sortie (5) et s'étend co-axialement dans la chambre (9).

11. Dispositif séparateur de fluide/particules suivant la revendication 10, caractérisé en ce qu'un intervalle cylindrique est délimité entre un bord libre de la paroi formant chicane (12) et le rotor, cet intervalle ayant en substance la même étendue totale que l'aire circonscrite par la paroi formant chicane.

12. Dispositif séparateur de fluide/particules suivant l'une quelconques des revendications précédentes, caractérisé en ce qu'il peut être monté dans un récipient (2) comportant une ouverture d'entrée (6) pour un fluide à débarrasser de ses particules, de telle sorte que la sortie (5) de la chambre (9) communique avec une ouverture de sortie du récipient, les particules étant retenues dans le récipient lorsque le dispositif est utilisé et le fluide épuré passant par l'ouverture de sortie.

13. Dispositif séparateur de fluide/particules suivant la revendication 12, caractérisé en ce qu'il peut être monté dans le récipient (2) d'un aspirateur (1) et l'élément d'entraînement pour le rotor (18) est un arbre d'entraînement de prolongement (20) propre à être accouplé à un arbre d'entraînement (20a) d'un groupe moteur/turbine (3) de l'aspirateur afin d'être entraîné par ce dernier, le groupe moteur/turbine coopérant avec l'ouverture de sortie du récipient (2) pour aspirer de l'air du récipient à travers le dispositif séparateur (8).

14. Aspirateur comprenant un récipient comportant une ouverture d'entrée, une ouverture de sortie et un groupe moteur/turbine propre à aspirer de l'air du récipient par l'ouverture de sortie, caractérisé en ce qu'il comprend un dispositif séparateur de fluide/particules (8) suivant la revendication 12 ou 13 monté dans le récipient (2), de telle façon que la sortie (5) de la chambre (9) du dispositif séparateur communique avec l'ouverture de sortie du récipient.

15. Dispositif séparateur de fluide/particules suivant l'une quelconque des revendications 1 à 12 comprenant, en outre, un groupe moteur/turbine (3) raccordé à la sortie (5) et propre à évacuer de fluide de la chambre (9) à travers celle-ci pour créer le flux de fluide pénétrant dans la chambre par l'entrée (19) en service.

_Fig.1._

Fig.2.

Fig.3.

Fig.4.

COLLECTION EFFICIENCY %

PARTICLE SIZE, μm.

0 004 145

3